# EUROPÄISCHE PATENTSCHRIFT

(11) **EP 0 742 399 B1**
(45) Veröffentlichungstag und Bekanntmachung des Hinweises auf die Patenterteilung: **27.03.2002**
(21) Anmeldenummer: 96107135.4
(22) Anmeldetag: 07.05.1996
(51) Int. Cl.: F16L 11/127, F16L 11/118, F16L 11/22

(54) **Schlauch mit wenigstens einem zugentlasteten Energieleiter**
Hose with at least one strain relieved energy transmission line
Tuyaux avec au moins une ligne de transmission d'énergie sans contrainte de traction

(30) Priorität: 11.05.1995 DE 29507806 U
(43) Veröffentlichungstag der Anmeldung: 13.11.1996
(73) Patentinhaber: VACUFLEX GmbH, 64546 Mörfelden (DE)
(72) Erfinder: Eichelberger, Leo, Dipl.-Ing. (FH), 65428 Rüsselsheim (DE); Endres, Georg, 65934 Frankfurt/M.-Nied (DE); Jourdan, Ralf, Dipl.-Ing. (FH), 64546 Moerfelden-Walldorf (DE); Gehlhaar, Dieter, Dipl.-Ökonom, 42389 Wuppertal (DE); Fuths, Wolfgang, 42279 Wuppertal (DE); Conze, Michael, Dipl.-Physiker, 53113 Bonn (DE); Jäger, Jürgen, 58456 Witten (DE)
(74) Vertreter: Schieferdecker, Lutz, Dipl.-Ing.

(56) Entgegenhaltungen:
- US-A- 2 301 207
- US-A- 2 917 568
- US-A- 4 517 404
- US-A- 4 798 230

## Beschreibung

Die Erfindung betrifft einen Schlauch mit wenigstens einem zugentlasteten Energieleiter sowie mit weiteren Merkmalen gemäß dem Oberbegriff des Anspruches 1.

Ein Schlauch der genannten Art ist aus US-A-2,917,568 bekannt und weist innerhalb einer flexiblen, schlauchartigen Umhüllung, die im wesentlichen parallel zur Schlauchachse verläuft, einen Leiterkanal auf. In diesem Leiterkanal ist wenigstens ein Energieleiter angeordnet und ferner ist dem Leiterkanal wenigsten ein betriebsbedingte Zugbeanspruchungen aufnehmendes Zugelement zugeordnet. Das Zugelement ist beim Gegenstand der US 2,917,568 ein hochzugfestes Kabel. Der Leiterkanal bzw. der ihn bildende Innenschlauch befinden sich in einer zentralen Position in dem Außenschlauch und durchgreifen diesen an einer für Betriebszwecke notwendigen Austrittsstelle. Dort ist das hochfeste Zugelement zugleich befestigt. Es dient zum Schutz des bzw. der Energieleiter, bei denen es sich gemäß der Lehre des US-Patentes 2,917,568 um elektrische Kabel handelt. Konkret eingesetzt wird der bekannte Schlauch zur Versorgung von Piloten mit Atemluft, während die Elektrokabel in dem Innenschlauch zu Kommunikationszwecken vorgesehen sind. Grundsätzlich sind derartige Schläuche nur sehr kurz und werden regelmäßig schonend behandelt, da ihre einwandfreie Funktion lebensnotwendig. ist. Vorteilhaft ist ferner, daß sie sich in jede beliebige Richtung abbiegen lassen. Die an den einzelnen Teilen auftretenden Zugbelastungen sind regelmäßig sehr gering.

Aus der US-A-4,517,404 ist ferner ein Staubsaugerschlauch mit einem Innenschlauch geringeren Durchmessers zum Leiten einer Flüssigkeit bekannt. Der Innenschlauch ist auf der Innenseite des Außenschlauches geradlinig angeordnet. Als Armierungsdrähte vorgesehene Wendeln sollen darüber hinaus zugleich als Stromleiter dienen.

Der aus der US-4,517,404 bekannte Schlauch erfüllt sicherlich die an ihn gestellten Anforderungen. Aber weder das Schlauchmaterial noch die zu Armierungszwecken vorgesehen Wendeln sind dazu geeignet, größere Zugkräfte aufzunehmen. Darüber hinaus eigenen sich Werkstoffe, die elektrischen Strom gut leiten, nicht zur Verwendung als Armierungsdraht und umgekehrt gilt grundsätzlich dasselbe, denn ein Armierungsstahl ist kein guter elektrischer Leiter.

Die aus der US 4,517,404 bekannte Armierung in Gestalt von zwei parallel zueinander angeordneten Wendeln ist darüber hinaus in erster Linie dazu geeignet, um radial am Schlauch angreifende Kräfte aufzunehmen. Sie besitzen eine vergleichsweise nur untergeordnete Bedeutung für die Aufnahme von betriebsbedingten, in axialer Richtung gerichteten Zugkräften.

Der Erfindung liegt gegenüber dem Stand der Technik die Aufgabe zugrunde, beim eingangs beschriebenen Schlauch die Zugentlastung der Umhüllung zu verbessern, ohne daß dieses auf Kosten der Flexibilität und leichten Handhabung des Schlauches erfolgt.

Zur Lösung dieser Aufgabe schlägt die Erfindung die Merkmale des Anspruchs 1 vor.

Zweckmäßige Ausgestaltungen und Weiterbildungen der Erfindung ergeben sich aus den Unteransprüchen.

Als Zugelemente können Bänder oder Fäden, beispielsweise aus Glascord, Aramid oder sonstige hochfeste Garne vorgesehen sein, die im Gegensatz zur Umhüllung selbst nicht oder nahezu nicht dehnbar sind und somit Zugbelastungen aufnehmen und dadurch die Umhüllung entlasten, so daß auf eine vergleichsweise dickwandige bzw. steife Umhüllung verzichtet werden kann, ohne daß die Gefahr von Beschädigungen oder Zerstörungen durch die Einwirkung von Zugkräften besteht, die beim Einsatz des Schlauches auftreten können. Ein Energieleiter bzw. Stomleiter kann daher ohne Überlänge axial in die Umhüllung eingezogen werden. Die Flexibilität des Schlauches wird durch die ausschließlich zur Aufnahme von Zugkräften geeigneten Zugelemente nicht herabgesetzt. Außerdem erhöhen die Zugelemente das Schlauchgewicht nur unwesentlich, so daß der erfindungsgemäße Schlauch auch leicht und gut zu handhaben ist.

Die feste Verbindung des Zugelements mit der Umhüllung bzw. dem Schlauch über im wesentlichen die gesamte Schlauchlänge ist ein bedeutsames Merkmal der Erfindung. Würde man ein Zugelement einfach lose durch den Leiterkanal führen und nur an seinen Enden - also an den Schlauchenden - verankern, so ist hierzu eine aufwendige bruchsichere Befestigung notwendig, für die in den Anschlußstücken kaum der erforderliche Platz zur Verfügung steht. Außerdem ist eine solche Befestigung bei Verwendung eines Cordfadens normalerweise mit einer gewissen Beschädigung des Cordfadens verbunden, wodurch die Zugentlastung geschwächt wird. Im übrigen ist eine solche Zugentlastung auch nur bei gestrecktem Schlauch wirksam. Demgegenüber ist erfindungsgemäß das bzw. jedes Zugelement so in den Schlauch integriert, daß es über die gesamte Schlauchlänge verankert ist. Dadurch wird eine wesentlich bessere Kraftübertragung erzielt, bei der auf eine zusätzliche Verankerung in den Anschlußstücken sogar verzichtet werden kann.

Im Rahmen der Erfindung kommen handelsübliche Schlauchausführungen wie profilierte Vollkunststoff-Schläuche oder auch mit einer Stahlfederwendel verstärkte Kunststoff-Wellschläuche in Betracht. Der Schlauch muß nicht zylindrisch sondern kann auch konisch gestaltet sein, um Strömungsverluste zu reduzieren. Ferner wird die Wirkung des Zugelements unterstützt, wenn der Schlauch und/oder die Umhüllung mit einer Axialdehnungen entgegenwirkenden Verstärkung versehen sind.

Das Einsatzgebiet für den erfindungsgemäßen Schlauch erstreckt sich nicht nur auf Saugschläuche (z.B. Staubsaugerschläuche) sondern ebenfalls auf Druckschläuche. Ferner kommen nicht nur Anwendungen in Betracht, bei denen die Umhüllung als Schutzhülle für ein Elektrokabel oder einen Lichtleiter fungiert, sondern auch solche Anwendungen, bei denen die Umhüllung selbst den Energieleiter bildet und als hydraulische oder pneumatische Übertragungsleitung dient oder bei denen in der Umhüllung zusätzliche Druck- oder Saugleitungen als Übertragungselemente angeordnet sind. Weiterhin können zwei oder mehrere Leiterkanäle (Umhüllungen) außen oder innen am Schlauchumfang angeordnet sein, um sowohl elektrische wie auch hydraulische, pneumatische oder sonstige Übertragungselemente aufzunehmen. Diese vielseitigen Nutzungsmöglichkeiten und die bereits angesprochene leichte Handhabbarkeit eröffnen dem erfindungsgemäßen Schlauch vielfache Einsatzmöglichkeiten im Haushalt und in der Industrie sowie allgemein im Maschinenbau und beispielsweise auch auf dem Gebiet der Medizintechnik.

Ausführungsbeispiele der Erfindung werden nachfolgend anhand einer schematischen Zeichnung näher erläutert. Es zeigen
- Figur 1: einen Längsschnitt durch einen Wellschlauch mit einem Leiterkanal in einer innenseitigen Umhüllung;
- Figur 2: einen Querschnitt durch den Wellschlauch gemäß Figur 1;
- Figur 3: die in Figur 2 gestrichelt eingekreiste Einzelheit III in vergrößertem Maßstab unter Hervorhebung der die Umhüllung mit dem Wellschlauch verbindenden Klebstoffschicht mit einem darin eingebetteten Zugelement;
- Figur 4: eine Figur 3 entsprechende Darstellung einer anderen Ausführung mit in die Umhüllung integrierten Zugelementen;
- Figur 5: eine Figur 3 entsprechende Darstellung einer wiederum anderen Ausführungsform mit außen an der Umhüllung angeklebten Zugelementen;
- Figur 6: eine Figur 3 entsprechende Darstellung einer noch anderen Ausführungsform mit innerhalb der Umhüllung angeordneten Zugelementen;
- Figur 7: einen Längsschnitt durch einen Wellschlauch mit einem Leiterkanal in einer außenseitigen Umhüllung;
- Figur 8: einen Querschnitt durch den Wellschlauch gemäß Figur 7;
- Figur 9: die in Figur 8 gestrichelt eingekreiste Einzelheit IX in vergrößertem Maßstab - wiederum mit einem in eine Klebstoffschicht eingebetteten Zugelement;
- Figur 10: eine Figur 9 entsprechende Darstellung einer anderen Ausführung mit in die Umhüllung integrierten Zugelementen;
- Figur 11: eine Figur 9 entsprechende Darstellung einer wiederum anderen Ausführungsform mit außen an der Umhüllung angeklebten Zugelementen;
- Figur 12: eine Figur 9 entsprechende Darstellung einer noch anderen Ausführungsform mit innerhalb der Umhüllung angeordneten Zugelementen;
- Figur 13: einen Schlauch mit zwei außenseitigen Umhüllungen im Querschnitt;
- Figur 14: einen Schlauch mit zwei innenseitigen Umhüllungen im Querschnitt;
- Figur 15: einen Schlauch mit drei außenseitigen Umhüllungen im Querschnitt und
- Figur 16: einen Schlauch mit drei innenseitigen Umhüllungen im Querschnitt.

Der Wellschlauch 1 weist eine Schlauchwand 2 auf, die aus hintereinander angeordneten Schlauchabschnitten 3 zusammengesetzt ist, die sich gegenseitig übergreifen. Eine Stahlfederwendel 4 stabilisiert den Wellschlauch 1, ohne daß dabei die Flexibilität verloren geht. Dementsprechend kann der an sich gerade Schlauch eine in Längsrichtung gekrümmte Form annehmen, wobei sich die Schlauchabschnitte 3 entsprechend etwas zueinander verschieben.

Parallel zur Schlauchachse 5 verläuft innerhalb des Wellschlauchs 1 eine flexible schlauchartige Umhüllung 6, die sich von einem Schlauchende zum anderen Schlauchende erstreckt und einen Energieleiter 7 aufnimmt, der sich z.B. aus drei metallischen Adern 8, 9, 10 mit jeweils einer Isolierummantelung 11 innerhalb eines von der Umhüllung 6 umschlossenen Leiterkanals 12 zusammensetzt, wie sich den Figuren 3 bis 6 entnehmen läßt. Dabei flankieren die außenliegenden Adern 8 und 10 die mittlere Ader 9, und entsprechend dieser Anordnung ist auch die schlauchförmige Umhüllung 6 oval abgeflacht, jedoch könnte auch eine anders gestaltete, z.B. runde Querschnittsform des Leiterkanals 12 vorgesehen sein.

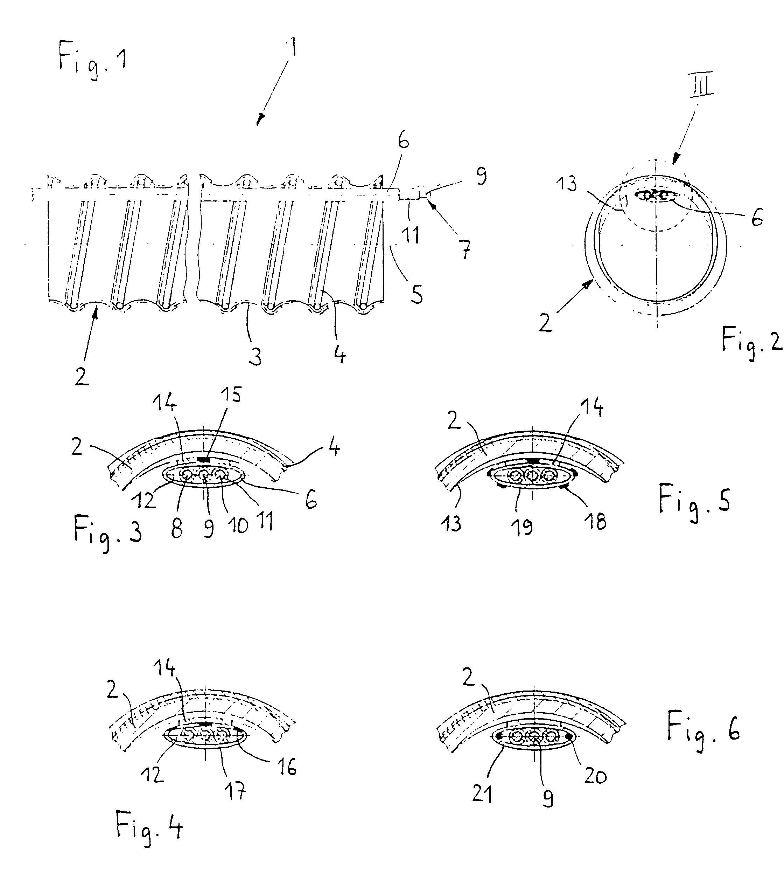

Einer der beiden abgeflachten Umfangsbereiche der Umhüllung 6 ist mit der Innenwandfläche 13 der Schlauchwand 2 durch eine Klebstoffschicht 14 fest verbunden, wobei ein Klebstoff verwendet wird, der den Werkstoffen angepaßt ist, aus denen die Schlauchwand 2 und die Umhüllung 6 hergestellt sind. Diese Werkstoffe sind vorzugsweise Kunststoffe, beispielsweise aus Polyurethan (PU), wobei dann ein PU-Kleber verwendet wird. Die Klebstoffschicht 14 erstreckt sich über die ganze Schlauchlänge und verbindet die Umhüllung 6 sowohl mit den einzelnen Windungen der Stahlfederwendel 4 wie mit den einzelnen Schlauchabschnitten 3. Somit ist die den Leiterkanal 12 umschließende Umhüllung 6 über ihre ganze Länge fest mit der Schlauchwand 2 verbunden, selbst wenn - bedingt durch die aus Figur 1 ersichtliche Wellenform der Innenwandfläche 13 - diese Verbindung jeweils in den Bereichen unmittelbar neben den Stahlfederwindungen auf einer kurzen Länge unterbrochen ist.

Charakteristisch für die Erfindung ist das Zugelement 15, das gemäß Figur 3 in die Klebstoffschicht 14 eingebettet ist und sich wie die Klebstoffschicht von einem Schlauchende zum anderen Schlauchende erstreckt. Dieses Zugelement 15 nimmt evtl. auftretende Zugbeanspruchungen auf und entlastet dementsprechend die Umhüllung 6 und den von ihr aufgenommenen Energieleiter 7.

Die Ausführungsform gemäß Figur 4 unterscheidet sich von der zuvor beschriebenen nur dadurch, daß drei Zugelemente 16 vorgesehen und diese nicht in die Klebstoffschicht 14 eingebettet sondern mit Umfangsabständen in die Wand der Umhüllung 17 integriert sind. Dabei sind die Zugelemente 16 nicht gleichmäßig über den Umfang der Umhüllung 17 verteilt sondern nur innerhalb des Umfangsbereichs angeordnet, der der Klebstoffschicht 14 zugewandt ist.

Bei der Ausführungsform gemäß Figur 5 sind fünf Zugelemente 18 vorgesehen, die außenseitig an der Umhüllung 19 anliegen und mit dieser verklebt sind. Hier sind die Zugelemente 18 über den gesamten Umfang der Umhüllung 19 verteilt, wenn auch nicht in exakt gleichen Umfangsabständen. Diese Anordnung bringt es mit sich, daß eines der Zugelemente 18 zugleich innerhalb der Klebstoffschicht 14 liegt.

Bei der Ausführungsform gemäß Figur 6 sind zwei Zugelemente 20 vorgesehen, die innerhalb der Umhüllung 21 verlaufen. Die Zugelemente 20 sind einander diametral gegenüberliegend dort angeordnet, wo die ovale Umhüllung 21 ihre größte Krümmung aufweist. Auch hier sind die Zugelemente 20 mit der Umhüllung 21 verklebt.

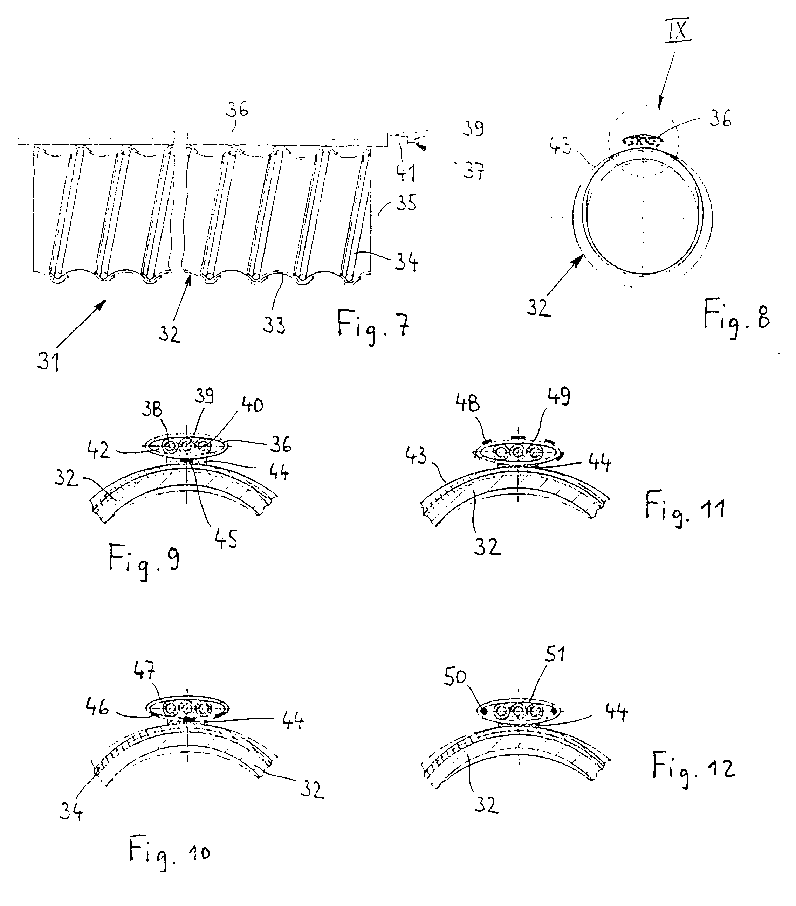

Die Figuren 7 und 8 zeigen einen dem Wellschlauch 1 ähnlichen Wellschlauch 31 mit einer Schlauchwand 32, die aus Schlauchabschnitten 33 zusammengesetzt ist und durch eine Stahlfederwendel 34 stabilisiert ist. Auch hier ist eine parallel zur Schlauchachse 35 verlaufende Umhüllung 36 vorgesehen, die einen Energieleiter 37 in Form eines Stromleiters mit drei Adern 38, 39, 40 jeweils innerhalb einer Isolierummantelung 41 aufweist, wobei die Adern 38, 39, 40 innerhalb des von der Umhüllung 36 umschlossenen Leiterkanals 42 verlaufen.

Abweichend von den zuvor beschriebenen Ausführungsformen ist die Umhüllung 36 jedoch nicht mit der Innenwandfläche sondern mit der Außenwandfläche 43 der Schlauchwand 32 verbunden - und zwar wiederum mittels einer Klebstoffschicht 44.

Diese außenseitige Anordnung der Umhüllung gilt für alle vier Ausführungsformen der Figuren 9 bis 12, die im übrigen hinsichtlich der vorgesehenen Zugelemente und ihrer Anordnung genau den Ausführungsformen gemäß den Figuren 3 bis 6 entsprechen. Somit ist nach Figur 9 ein einziges Zugelement 45 vorgesehen, das in die Klebstoffschicht 44 eingebettet ist. Die Ausführungsform gemäß Figur 10 weist drei Zugelemente 46 auf, die in die Umhüllung 47 integriert sind. Die Ausführungsform gemäß Figur 11 weist fünf Zugelemente 48 auf, die außen an die Umhüllung 49 angeklebt sind, wobei jedoch keines dieser Zugelemente 48 innerhalb der Klebstoffschicht 14 verläuft. Bei der Ausführungsform gemäß Figur 12 sind entsprechend der Ausführung gemäß Figur 6 zwei Zugelemente 50 vorgesehen, die innerhalb der Umhüllung 51 verlaufen und gleichfalls angeklebt sind.

Wie dargestellt sind die Zugelemente 15, 16 und 18 sowie 45, 46 und 48 bandförmig ausgeführt, während die Zugelemente 20 und 50 gemäß den Figuren 6 bzw. 12 mit einem runden Profil bzw. einem Kreisquerschnitt ausgeführt sind. Beispielsweise können Glascordfäden als derartige Zugelemente verwendet werden. Solche Glascordfäden besitzen eine hohe Zugfestigkeit, die beispielsweise mindestens 500 bis 600 N beträgt. Entsprechende Glascordfäden oder vergleichbare Bänder führen zu einer wirksamen Zugentlastung der Umhüllungen 6, 17, 19 und 21 bzw. 36, 47, 49 und 51 sowie der von diesen umschlossenen Energieleiter 7 bzw. 37.

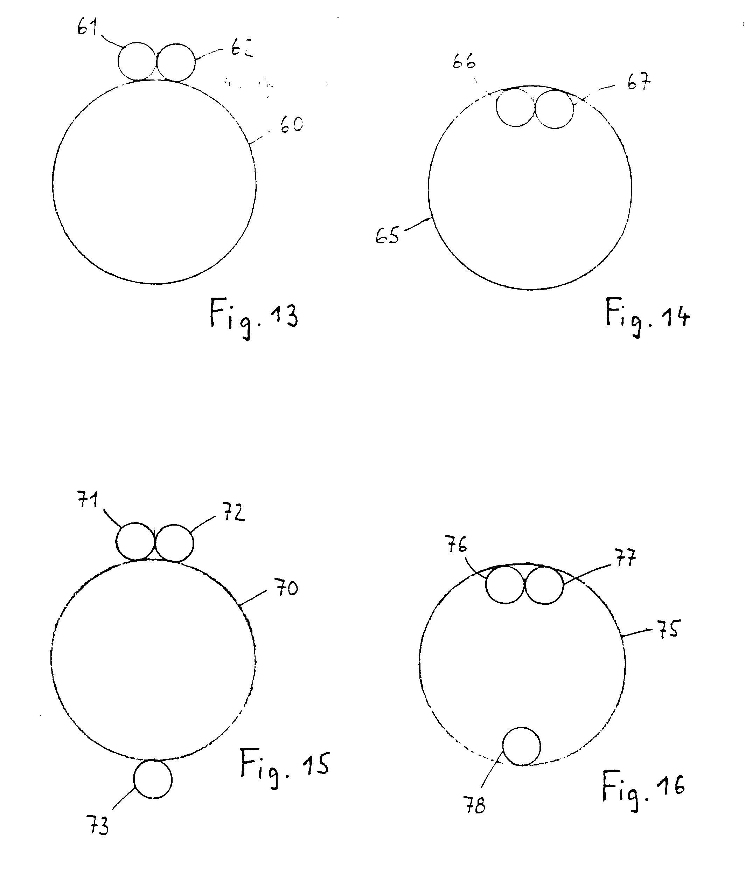

Die schematischen Figuren 13 bis 16 machen deutlich, daß die Erfindung sich auch auf Schläuche mit zwei oder mehreren Leiterkanälen bzw. Umhüllungen bezieht, die innenseitig und/oder außenseitig am Schlauch angeordnet sein können, wobei ein Leiterkanal, ein Teil der Leiterkanäle oder alle Leiterkanäle in der vorstehend beschriebenen Weise mit einer Zugentlastung durch wenigstens ein Zugelement (nicht dargestellt) versehen sind. Im Interesse des Erhalts der Flexibilität des Schlauchs empfiehlt sich eine Anordnung der Leiterkanäle bzw. Umhüllungen, wie sie aus den Figuren 13 bis 16 zu ersehen ist, in denen die Einzelheiten der sonstigen Ausbildung weggelassen sind.

Nach Figur 13 ist ein Schlauch 60 mit zwei Umhüllungen 61 und 62 von kreisförmigem Querschnitt vorgesehen, die sowohl am Außenumfang des Schlauchs 60 wie aneinander anliegen - und zwar in fester gegenseitiger Verbindung. In entsprechender Weise ist nach Figur 14 ein Schlauch 65 mit zwei Umhüllungen 66 und 67 von kreisförmigem Querschnitt vorgesehen, die am Innenumfang des Schlauchs 65 und aneinander anliegen.

Nach den Figuren 15 und 16 sind den Figuren 13 bzw. 14 entsprechende Schläuche 70 und 75 mit zwei außenseitig angeordneten und aneinander anliegenden Umhüllungen 71 und 72 bzw. mit zwei innenseitig angeordneten und aneinander anliegenden Umhüllungen 76 und 77 vorgesehen, wobei jedoch jeweils zusätzlich eine dritte Umhüllung 73 bzw. 78 vorhanden ist. Diese schließt jedoch nicht an die beiden ersten Umhüllungen 71, 72 bzw. 76, 77 an sondern ist diesen diametral gegenüberliegend angeordnet und wiederum fest mit dem Schlauch 70 bzw. 75 verbunden.

## Patentansprüche

1. Schlauch mit wenigstens einem Energieleiter (7, 37), insbesondere Stromleiter (8 bis 10, 38 bis 40), innerhalb einer flexiblen schlauchartigen Umhüllung (6, 17, 19, 21; 36, 47, 49, 51), die im wesentlichen parallel zur Schlauchachse (5, 35) verläuft und einen Leiterkanal (12, 42) umschließt und mit wenigstens einem ausschließlich zur Aufnahme von betriebsbedingten Zugbeanspruchungen geeigneten Zugelement, **dadurch gekennzeichnet,**
**dass** das bzw. jedes Zugelement (15, 16, 18, 20; 45, 46, 48, 50) über seine ganze Länge zwischen den beiden Schlauchenden fest mit der Umhüllung (6, 17, 19, 21; 36, 47, 49, 51) und/oder dem Schlauch (1, 31) verbunden ist, so daß es über die gesamte Schlauchlänge verankert ist und
**dass** die Umhüllung (6, 17, 19, 21; 36, 47, 49, 51) über ihre Länge fest mit der Schlauchwand (2, 32) verbunden ist.

2. Schlauch nach Anspruch 1, **dadurch gekennzeichnet, daß** das bzw. jedes Zugelement (15; 45) in eine Verbindungsschicht (14; 44), insbesondere Klebstoffschicht, eingebettet ist, die jeweils einen Umfangsbereich des Schlauchs (1; 31) und der Umhüllung (6; 36) miteinander verbindet.

3. Schlauch nach Anspruch 1, **dadurch gekennzeichnet, daß** das bzw. jedes Zugelement (16; 46) in die Wand der Umhüllung (17; 47) integriert ist.

4. Schlauch nach Anspruch 1, **dadurch gekennzeichnet, daß** das bzw. jedes Zugelement (18,; 48) außenseitig an der Wand der Umhüllung (19; 49) angeordnet ist.

5. Schlauch nach Anspruch 1, **dadurch gekennzeichnet, daß** das bzw. jedes Zugelement (20; 50) innenseitig an der Wand der Umhüllung (21; 51) angeordnet ist.

6. Schlauch nach einem der Ansprüche 3 bis 5 mit zwei oder mehr Zugelementen (16, 18, 20; 46, 48, 50) **dadurch gekennzeichnet, daß** die Zugelemente (16, 28, 20; 46, 48, 50) mit Umfangsabständen in bzw. an der Umhüllung (17, 19, 21; 47, 49, 51) angeordnet sind.

7. Schlauch nach einem der Ansprüche 1 bis 6, **dadurch gekennzeichnet, daß** die Umhüllung (6, 17, 19, 21) mit der Innenwandfläche (13) des Schlauches (1) fest verbunden ist.

8. Schlauch nach einem der Ansprüche 1 bis 6, **dadurch gekennzeichnet, daß** die Umhüllung (36, 47, 49, 51) mit der Außenwandfläche (43) des Schlauches (31) fest verbunden ist.

9. Schlauch nach einem der Ansprüche 1 bis 8, **dadurch gekennzeichnet, daß** das bzw. jedes Zugelement (15, 16, 18, 20; 45, 46, 48, 50) von einem axial verlaufenden Band oder Faden, insbesondere Glascordfaden, gebildet ist.

10. Schlauch nach einem der Ansprüche 1 bis 9, **dadurch gekennzeichnet, daß** der Schlauch (1, 31) und/oder die Umhüllung (6, 17, 19, 21; 36, 47, 49, 51) mit einer weiteren, Axialdehnungen verhindernden Verstärkung, insbesondere einer Faserfüllung oder einer Geflechts- bzw. Klöppellage, versehen sind.

11. Schlauch nach einem der Ansprüche 1 bis 10, **dadurch gekennzeichnet, daß** er als Wellschlauch (1; 31) mit einer Stahlfederwendel (4; 34) ausgeführt ist.

12. Schlauch nach einem der Ansprüche 1 bis 11, **dadurch gekennzeichnet, daß** die Schlauchwand (2; 32) und die Umhüllung (6, 17, 19, 21; 36, 47, 49, 51) aus einem Kunststoff bestehen.

13. Schlauch nach Anspruch 12, **dadurch gekennzeichnet, daß** die Schlauchwand (2; 32) und die Umhüllung (6, 17, 19, 21; 36, 47, 49, 51) durch Verschweißung und/oder Verklebung miteinander verbunden sind.

14. Schlauch nach einem der Ansprüche 1 bis 13, **dadurch gekennzeichnet, daß** als Energieleiter (7; 37) wenigstens ein Stromkabel (8 bis 10; 38 bis 40) vorgesehen ist, das sich lose durch die Umhüllung (6, 17, 19, 21; 36, 47, 49, 51) erstreckt.

15. Schlauch nach einem der Ansprüche 1 bis 14, **dadurch gekennzeichnet, daß** zwei oder mehr Leiterkanäle mit eigenen Umhüllungen (61, 62; 66, 67; 71, 72, 73; 76, 77, 78) vorgesehen sind.

16. Schlauch nach Anspruch 15 mit zwei Umhüllungen (61, 62; 66, 67), **dadurch gekennzeichnet, daß** die beiden Umhüllungen (61, 62; 66, 67) ohne Umfangsabstand nebeneinander angeordnet und fest mit dem Schlauch (60; 65) verbunden sind.

17. Schlauch nach Anspruch 15 mit drei Umhüllungen (71, 72, 73; 76, 77, 78) **dadurch gekennzeichnet, daß** zwei Umhüllungen (71, 72; 76, 77) ohne Umfangsabstand nebeneinander und der dritten Umhüllung (73; 78) diametral gegenüberliegend am Umfang des Schlauchs (70; 75) angeordnet und fest mit diesem verbunden sind.

18. Schlauch nach Anspruch 16 oder 17, **dadurch gekennzeichnet, daß** die ohne Umfangsabstand nebeneinander angeordneten Umhüllungen (61, 62; 66, 67; 71, 72; 76, 77) auch untereinander fest verbunden sind.

19. Schlauch nach mindestens einem der vorhergehenden Ansprüche, **dadurch gekennzeichnet, daß** die schlauchförmige Umhüllung (6) oval abgeflacht ist.

## Claims

1. Hose with at least one energy conductor (7, 37), especially current conductor (8 to 10, 38 to 40), within a flexible hose-like sheathing (6, 17, 19, 21; 36, 47, 49, 51), which extends substantially parallel to the hose axis (5, 35) and encloses a conductor channel (12, 42) and with at least one tension element suitable exclusively for acceptance of tension loads caused by operation, **characterised in that** the or each tension element (15, 16, 18, 20; 45, 46, 48, 50) is or are fixedly connected over the entire length thereof between the two hose ends with the sheathing (6, 17, 19, 21; 36, 47, 49, 51) and/or the hose (1, 31) so that it is anchored over the entire hose length, and that the sheathing (6, 17, 19, 21; 36, 47, 49, 51) is fixed connected over its length with the hose wall (2, 32).

2. Hose according to claim 1, **characterised in that** the or each tension element (15; 45) is embedded in a connecting layer (14; 44), especially glue layer, which in each case interconnects a circumferential region of the hose (1; 31) and the sheathing (6; 36).

3. Hose according to claim 1, **characterised in that** the or each tension element is integrated in the wall of the sheathing (17; 47).

4. Hose according to claim 1, **characterised in that** the or each tension element is arranged externally at the wall of the sheathing (19; 49).

5. Hose according to claim 1, **characterised in that** the or each tension element is arranged internally at the wall of the sheathing (21; 51).

6. Hose according to one of claims 3 to 5 with two or more tension elements (16, 18, 20; 46, 48, 50), **characterised in that** the tension elements (16, 18, 20; 46, 48, 50) are arranged at circumferential spacings in or at the sheathing (17, 19, 21; 47, 49, 51).

7. Hose according to one of claims 1 to 6, **characterised in that** the sheathing (6, 17, 19, 21) is fixedly connected with the inner wall surface (13) of the hose (1).

8. Hose according to one of claims 1 to 6, **characterised in that** the sheathing (36, 47, 49, 51) is fixedly connected with the outer wall surface (43) of the hose (31).

9. Hose according to one of claims 1 to 8, **characterised in that** the or each tension element (15, 16, 18, 20; 45, 46, 48, 50) is formed by an axially extending band or thread, especially glass cord thread.

10. Hose according to one of claims 1 to 9, **characterised in that** the hose (1, 31) and/or the sheathing (6, 17, 19, 21; 36, 47, 49, 51) is or are provided with a further reinforcement preventing axial stretching, especially a fibre filling or a braided or lacework layer.

11. Hose according to one of claims 1 to 10, **characterised in that** it is constructed as a corrugated hose (1; 31) with a steel spring coil (4; 34).

12. Hose according to one of claims 1 to 11, **characterised in that** the hose wall (2; 32) and the sheathing (6, 17, 19, 21; 36, 47, 49, 51) consist of a synthetic material.

13. Hose according to claim 12, **characterised in that** the hose wall (2; 32) and the sheathing (6, 17, 19, 21; 36, 47, 49, 51) are connected together by welding and/or gluing.

14. Hose according to one of claims 1 to 13, **characterised in that** at least one current cable (8 to 10; 38 to 40), which extends loosely through the sheathing (6, 17, 19, 21; 36, 47, 49, 51), is provided as energy conductor (7; 37).

15. Hose according to one of claims 1 to 14, **characterised in that** two or more conductor channels with own sheathings (61, 62; 66, 67; 71, 72, 73; 76, 77, 78) are provided.

16. Hose according to claim 15 with two sheathings (61, 62; 66, 67), **characterised in that** the two sheathings (61, 62; 66, 67) are arranged adjacent to one another without circumferential spacing and are fixedly connected with the hose (60; 65).

17. Hose according to claim 15 with three sheathings (71, 72, 73; 76, 77, 78), **characterised in that** two sheathings (71, 72; 76, 77) are arranged adjacent to one another without circumferential spacing and the third sheathing (73; 78) is arranged diametrically opposite at the circumference of the hose (70; 75) and the sheathings are fixedly connected therewith.

18. Hose according to claim 16 or 17, **characterised in that** the sheathings (61, 62; 66, 67; 71, 72; 76, 77) arranged adjacent to one another without circumferential spacing are also fixedly connected with one another.

19. Hose according to at least one of the preceding claims, **characterised in that** the hose-shaped sheathing (6) is flattened to be oval.

## Revendications

1. Tuyau avec au moins une ligne de transmission d'énergie (7, 37), notamment un conducteur de courant (8 à 10, 38 à 40) à l'intérieur d'une gaine flexible tubulaire (6, 17, 19, 21 ; 36, 47, 49, 51) qui s'étend sensiblement parallèlement à l'axe de tuyau (5, 35) et renferme un canal de conducteur (12, 42) et avec au moins un élément de traction qui convient exclusivement pour la réception de contraintes de traction dues au fonctionnement, **caractérisé**
**en ce que** le respectivement chaque élément de traction (15, 16, 18, 20 ; 45, 46, 48, 50) est relié sur toute sa longueur entre les deux extrémités de tuyau solidement à la gaine (6, 17, 19, 21 ; 36, 47, 49, 51) et/ou au tuyau (1, 31) de telle sorte qu'il est ancré sur toute la longueur du tuyau et
**en ce que** la gaine (6, 17, 19, 21 ; 36, 47, 49, 51) est reliée sur sa longueur solidement à la paroi de tuyau (2, 32).

2. Tuyau selon la revendication 1, **caractérisée en ce que** le respectivement chaque élément de traction (15, 45) est noyé dans une couche de liaison (14 ; 44), notamment une couche de colle qui relie respectivement une zone périphérique du tuyau (1 ; 31) et de la gaine (6 ; 36) l'une à l'autre.

3. Tuyau selon la revendication 1, **caractérisé en ce que** le respectivement chaque élément de traction (16, 46) est intégré dans la paroi de la gaine (17, 47).

4. Tuyau selon la revendication 1, **caractérisé en ce que** le respectivement chaque élément de traction (18 ; 48) est disposé au côté extérieur à la paroi de la gaine (19 ; 49).

5. Tuyau selon la revendication 1, **caractérisé en ce que** le respectivement chaque élément de traction (20 ; 50) est disposé au côté intérieur à la paroi de la gaine (21 ; 51).

6. Tuyau selon l'une des revendications 3 à 5, avec deux éléments de traction ou plus (16, 18, 20 ; 46, 48, 50), **caractérisé en ce que** les éléments de traction (16, 28, 20 ; 46, 48, 50) sont disposés à des écarts périphériques dans respectivement à la gaine (17, 19, 21 ; 47, 49, 51).

7. Tuyau selon l'une des revendications 1 à 6, **caractérisé en ce que** la gaine (6, 17, 19, 21) est reliée solidement à la face de paroi intérieure (13) du tuyau (1).

8. Tuyau selon l'une des revendications 1 à 6, **caractérisée en ce que** la gaine (36, 47, 49, 51) est reliée solidement à la face de paroi extérieure (43) du tuyau (31).

9. Tuyau selon l'une des revendications 1 à 8, **caractérisée en ce que** le respectivement chaque élément de traction (15, 16, 18, 20 ; 45, 46, 48, 50) est formé par une bande ou fil s'étendant axialement, notamment un fil en corde de verre.

10. Tuyau selon l'une des revendications 1 à 9, **caractérisé en ce que** le tuyau (1, 31) et/ou la gaine (6, 17, 19, 21 ; 36, 47, 49, 51) sont pourvus d'un renforcement supplémentaire, empêchant des dilatations axiales, notamment d'un remplissage de fibres ou d'une couche tressée respectivement réalisée au fuseau de dentelière.

11. Tuyau selon l'une des revendications 1 à 10, **caractérisé en ce que** celui-ci est réalisé comme tuyau ondulé (1 ; 31) avec un ressort spiral en acier (4 ; 34).

12. Tuyau selon l'une des revendications 1 à 12, **caractérisé en ce que** la paroi de tuyau (2 ; 32) et la gaine (6, 17, 19, 21 ; 36, 47, 49, 51) sont constituées d'une matière synthétique.

13. Tuyau selon la revendication 12, **caractérisé en ce que** la paroi de tuyau (2 ; 32) et la gaine (6, 17, 19, 21 ; 36, 47, 49, 51) sont reliées l'une à l'autre par soudage et/ou collage.

14. Tuyau selon l'une des revendications 1 à 13, **caractérisé en ce qu'**il est prévu comme ligne de transmission d'énergie (7, 37) au moins un câble de courant (8 à 10 ; 38 à 40) qui s'étend lâchement à travers la gaine (6, 17, 19, 21 ; 36, 47, 49, 51).

15. Tuyau selon l'une des revendications 1 à 14, **caractérisé en ce que** deux canaux de conducteurs ou plus avec des gaines propres (61, 62 ; 66, 67 ; 71, 72, 73 ; 76, 77, 78) sont prévues.

16. Tuyau selon la revendication 15 avec deux gaines (61, 62 ; 66, 67) **caractérisé en ce que** les deux gaines (61, 62 ; 66, 67) sont disposées l'une à côté de l'autre sans écart périphérique et sont reliées solidement au tuyau (60 ; 65).

17. Tuyau selon la revendication 15 avec trois gaines (71, 72, 73 ; 76, 77, 78) **caractérisé en ce que** deux gaines (71, 72, 76, 77) sont disposées sans écart périphérique l'une à côté de l'autre et diamétralement en regard de la troisième gaine (73 ; 78) au pourtour du tuyau (70 ; 75) et sont reliées solidement à celui-ci.

18. Tuyau selon la revendication 16 ou 17, **caractérisé en ce que** les gaines (61, 62 ; 66, 67 ; 71, 72, 76, 77) disposées sans écart périphérique l'une à côté de l'autre sont également reliées solidement l'une à l'autre.

19. Tuyau selon au moins l'une des revendications précédentes, **caractérisé en ce que** la gaine tubulaire (6) est aplatie en une forme ovale.
